(19) Europäisches Patentamt
European Patent Office
Office européen des brevets

(11) EP 4 610 312 A1

(12) **EUROPEAN PATENT APPLICATION**
published in accordance with Art. 153(4) EPC

(43) Date of publication:
**03.09.2025 Bulletin 2025/36**

(21) Application number: **24872959.2**

(22) Date of filing: **26.09.2024**

(51) International Patent Classification (IPC):
***C08L 67/02** (2006.01)* ***C08L 67/04** (2006.01)*
***C08L 51/06** (2006.01)* ***C08J 5/18** (2006.01)*

(52) Cooperative Patent Classification (CPC):
**C08J 5/18; C08L 51/06; C08L 67/02; C08L 67/04**

(86) International application number:
**PCT/KR2024/014588**

(87) International publication number:
**WO 2025/071251 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 KR 20230129095**

(71) Applicant: **LG CHEM, LTD.**
**Seoul 07336 (KR)**

(72) Inventors:
- **JANG, Se Young**
  **Daejeon 34122 (KR)**
- **JEONG, Byeong Joon**
  **Daejeon 34122 (KR)**
- **CHOI, Young Hyun**
  **Daejeon 34122 (KR)**
- **NAM, Kidong**
  **Daejeon 34122 (KR)**
- **JUNG, Dongwook**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) RESIN COMPOSITION AND BIODEGRADABLE RESIN PRODUCT COMPRISING SAME

(57) The present disclosure relates to a resin composition and a biodegradable resin product comprising the same.

【Fig. 1b】

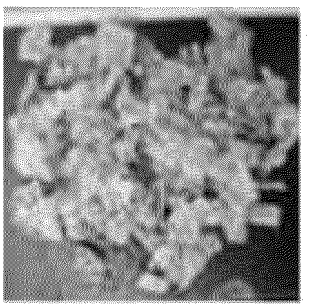



Processed by Luminess, 75001 PARIS (FR)

## Description

[Technical Field]

**Cross-reference to Related Applications**

This application claims the benefits of Korean Patent Application No. 10-2023-0129095 filed on September 26, 2023 and Korean Patent Application No. 10-2024-0130452 filed on September 26, 2024 with the Korean Intellectual Property Office, the disclosures of which are herein incorporated by reference in their entirety.
The present disclosure relates to a resin composition and a biodegradable resin product comprising the same.

[Background Art]

Thermoplastic polymer resin is used in various fields including drinking water containers, medical use, food wrapping paper, food containers, automobile molded articles, agricultural vinyl, and the like, due to excellent mechanical properties and chemical properties.
Since thermoplastic polymer resin, particularly a polyethylene film, and the like has excellent mechanical properties, is harmless to humans, and can be continuously deformed by heat, it is used a lot as a hot sealing bag for food packaging, or an agricultural mulching film, and the like.
The hot sealing bag for food packaging is mainly used for vacuum packaging of food, and the like, and a polyethylene film, and the like, capable of achieving excellent bonding strength even at a low sealing temperature, are used a lot.
The agricultural film is mainly used for mulching farming. Mulching refers to material covering the surface of soil when cultivating crops. If the upper surface of soil is covered with various kinds of materials, growth and development of weeds can be blocked, and damage by harmful insects can be prevented, and thus, use of agricultural pesticides can be reduced. Further, a temperature of soil can be easily controlled, beneficial bacteria in soil can be proliferated, soil erosion can be prevented and soil moisture can be retained.
As such mulching material, for example, the leaves of crops such as rice straw, trees and plants, and the like, or polyolefin-based films, and the like may be mentioned, and generally, synthetic resin such as a polyethylene film is used a lot.
However, the polyethylene film widely used as a hot sealing bag for food packaging or mulching material is not degraded in natural environments, and has a limit to recycle. Particularly, it is recently known that plastics such as wasted polyethylene films flow into the sea, and crushed into tiny microplastics by reflux and sunlight in the sea.
Currently, it is known that such microplastics float in the sea in an uncountable amount of more than billions to tens of billions, and they enter the bodies of sea creatures and are accumulated in the ecosystem to affect the entire food chain.
Thus, there is a demand for studies on the substitute of previously used thermoplastic plastics.
To solve this problem, recently, development of mulching films consisting of photodegradable or biodegradable polymers is being actively attempted, but biodegradability is not sufficient yet, and the mechanical properties fall short of the existing polyethylene film.

[Disclosure of Invention]

[Technical Problem]

It is an object of the present disclosure to provide a resin composition having excellent mechanical properties and exhibiting high biodegradability.
It is another object of the present disclosure to provide a biodegradable resin product comprising the resin composition.

[Technical Solution]

According to the present disclosure, there is provided a resin composition comprising

polybutylene adipate-co-terephthalate,
meso polylactic acid, and
maleic anhydride-grafted-polyolefin elastomer,
wherein the composition comprises the polybutylene adipate-co-terephthalate and meso polylactic acid at the weight ratio of 9.0:1.0 to 6.0:4.0.

According to the present disclosure, there is also provided a biodegradable resin product comprising the resin composition.

The terms used herein are only to explain specific embodiments, and are not intended to limit the invention.

A singular expression includes a plural expression thereof, unless the context clearly indicates otherwise.

As used herein, the term "comprise" is intended to designate the existence of practiced characteristic, number, step, constructional element or combinations thereof, and it is not intended to preclude the possibility of existence or addition of one or more other characteristics, numbers, steps, constructional elements or combinations thereof.

Unless otherwise defined herein, a room temperature is 25±5°C and an atmospheric pressure is 760±20 torr.

Although various modifications can be made to the present disclosure and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

Hereinafter, the present disclosure will be explained in detail.

The inventors of the present disclosure found out that when preparing a resin composition using polybutylene adipate-co-terephthalate (PBAT) and meso polylactic acid (Meso PLA), in case the meso polylactic acid is mixed at an optimal weight ratio to the polybutylene adipate-co-terephthalate and maleic anhydride-grafted-polyolefin elastomer is used together, high biodegradability as well as excellent mechanical properties such as tensile strength, elongation, tensile modulus, and the like, can be realized, and completed the invention.

PBAT is biodegradable polymer exhibiting high elongation at break and ductility. However, since it has low mechanical properties including tensile strength, tensile modulus, and the like, the application is limited. To overcome such limitation, by using PBAT in combination with other biodegradable polymer, the application range can be expanded and the properties can be improved.

Meanwhile, poly(lactic acid) (PLA) or polylactide is biodegradable polymer having high tensile strength and tensile modulus. However, PLA exhibits biodegradability only under specific biodegradation condition, specifically industrial compostable condition, and the biodegradability is limited under other conditions. Such a property of PLA may have an influence on the biodegradability of PBAT/PLA blend.

Thus, the resin composition according to one aspect of the present disclosure comprises Meso PLA instead of conventional PLA at an optimal weight ratio to PBAT, thereby exhibiting remarkably improved biodegradability as well as excellent mechanical properties.

Specifically, the resin composition according to one aspect of the present disclosure comprises polybutylene adipate-co-terephthalate (PBAT) and meso polylactic acid (Meso PLA) at the weight ratio of 9.0:1.0 to 6.0:4.0.

More specifically, the weight ratio of PBAT:Meso PLA in the resin composition may be 9.0:1.0 or less, or 8.7:1.3 or less, and 6.0:4.0 or more, or 7.0:3.0 or more, or 8.0:2.0 or more. Wherein, the expressions 'or more' and 'or less' are based on the content of PBAT.

If the weight ratio of PBAT:Meso PLA is greater than 9.0:1.0, and the content of Meso PLA is too low compared to PBAT, the resin composition may not exhibit sufficient biodegradability. Further, if the weight ratio of PBAT:Meso PLA is less than 6.0:4.0, and the content of Meso PLA is too high compared to PBAT, rigidity may increase, and thus, elongation of the resin composition may be lowered. Particularly, in case the resin composition is processed into a biodegradable film, and the like, processability may be lowered, and the properties required when used for a mulching film, and the like, may not be realized. Wherein, the expressions 'greater than' and 'less than' are based on the content of PBAT.

Further, while meeting the weight ratio range of the PBAT and Meso PLA, the Meso PLA may be included in the content of 7.0 to 75.0 parts by weight, based on 100 parts by weight of PBAT. More specifically, it may be included in the content of 7.0 parts by weight or more, or 10.0 parts by weight or more, or 14.0 parts by weight or more, or 14.5 parts by weight or more, and 75.0 parts by weight or less, or 70.0 parts by weight or less, or 68.0 parts by weight or less, based on 100 parts by weight of PBAT.

The "polylactic acid" herein denotes polymer of lactide, and has the same meaning as "polylactide" and "PLA".

Lactide or lactide monomer may be L-lactide derived from 2 L-lactic acid molecules; D-lactide derived from 2 D-lactic acid molecules; meso lactide derived from L-lactic acid molecule and D-lactic acid molecule; or a mixture of two or more of them. Also, it may be rac-Lactide, which is a 50:50 mixture of L-lactide and D-lactide. Thus, PLA herein may be lactide polymer selected from the group consisting of L-lactide, D-lactide, meso lactide, racemic lactide, and mixtures of two or more of them.

PLA with various structures may be synthesized from lactide by ring-opening polymerization according to steric control

Poly(L-lactic acid), polymer of L-lactide, and Poly(D-lactic acid), polymer of D-lactide, are structurally identical. It has the highest crystallinity among PLA, and exhibits semi-crystalline property. As the ratio of D-lactide increases in the PLA structure, amorphous properties are exhibited, but if the content of D-lactide exceeds 10% in the PLA structure, processability may be lowered. Thus, PLA generally has a high ratio of L-lactide, and commercial products commonly have L-lactide content of 95% or more, and D-lactide content of 5% or less.

Meanwhile, the solid-state morphology, degree of crystallinity, and primary chemical structure of PLA have an influence on the degradation characteristic of PLA.

The solid-stage morphology means the shape, thickness, surface area, etc. of PLA, and among them, the shape is very important for induction of efficient degradation.

The degree of crystallinity of PLA is also an important factor having an influence on the degradation characteristic of PLA.

In general, PLA begins to degrade in the amorphous area if water ($H_2O$) diffuses into PLA, and then, random hydrolysis occurs, and as the result, PLA degrades in the form of oligomers from polymer, and then, fragmented, and converted into $CO_2$ and $H_2O$ through diffusion and metabolism through more extensive hydrolysis. Thus, amorphous PLA may exhibit more excellent degradation characteristic than crystalline PLA.

The primary chemical structure of PLA, specifically the existence of functional groups, and hydrophilicity-hydrophobicity balance, also have an influence on the degradation characteristic of PLA.

In the present disclosure, Meso PLA is polymer prepared by polymerization of meso-lactide, and specifically, it may be amorphous polymer comprising repeat units represented by the following Chemical Formula 1:

[Chemical Formula 1]

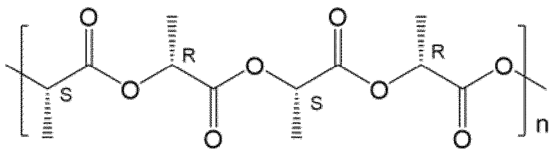

In the Chemical Formula 1, n is an integer of 2 or more.

Further, Meso PLA may meet the following requirements of (a1) and (a2).

(a1) density (ISO 1183): 1.15 to 1.35 g/ml
(a2) melt flow index (MFI) (ISO 1133-11, 190°C, 2.16kg): 3 to 15 g/10min

More specifically, the Meso PLA may have a density (ISO 1183) of 1.15 g/ml or more, or 1.20 g/ml or more, or 1.22 g/ml or more, or 1.24 g/ml or more, and 1.35 g/ml or less, or 1.30 g/ml or less, or 1.25 g/ml or less.

Further, the Meso PLA may have a melt flow index (MFI) (ISO 1133-11, 190°C, 2.16kg) of be 3 g/10min, or 5 g/10min or more, or 7 g/10min or more, and 15 g/10min or less, or 10 g/10min or less, or 9 g/10min or less.

In case the Meso PLA meets the afore-mentioned density and melt flow index conditions, it may exhibit more excellent mechanical properties including tensile strength and tensile modulus, and may be more favorable in terms of biodegradability improvement of a resin composition.

In the resin composition according to the present disclosure, the Meso PLA may consist only of the repeat units represented by the Chemical Formula 1. Namely, it may be Meso lactide homopolymer that does not comprise repeat units other than the repeat unit represented by the Chemical Formula 1.

Further, in the resin composition according to the present disclosure, the polybutylene adipate-co-terephthalate (PBAT) may meet the following requirements of (b1) and (b2).

(b1) melting temperature (Tm): 100 to 140°C
(b2) melt index (MI) (ASTM D 1238, 190°C, 2.16kg): 2.0 to 5.5 g/10min

More specifically, the PBAT may have a melting temperature of 100°C or more, or 105°C or more, or 110°C or more, and 140°C or less, or 135°C or less, or 130°C or less, or 125°C or less, or 120°C or less.

Meanwhile, in the present disclosure, the melting temperature of PBAT may be measured using a Differential Scanning Calorimeter (DSC). Specifically, using a Differential Scanning Calorimeter (DSC, TA200) manufactured by TA Instruments (New Castle, Delaware, U.S.), a temperature is raised from -100°C to 200°C at 10 °C/min, and maintained at 200°C for 1 min, and then, decreased from 200°C to -100°C at 10°C/min, and maintained for 1 min. While raising a temperature again from -100°C to 200°C at 10°C/min (2nd cycle), a melting temperature is measured. An inflection point in the second temperature rise section in the DSC differential temperature curve obtained is determined as a melting temperature.

Further, the PBAT may have a melt index (MI) (ASTM D 1238, 190°C, 2.16kg) of 2.0 g/10min or more, or 2.2 g/10min or more, or 2.5 g/10min or more, and 5.5 g/10min or less, or 5.0 g/10min or less, or 4.9 g/10min or less.

In case PBAT further meets the afore-mentioned melting temperature and melt index requirements, it may be more favorable in terms of biodegradability.

Further, in the resin composition according to the present disclosure, maleic anhydride-grafted polyolefin elastomer (MAH-g-POE) is a compound wherein maleic anhydride (MAH) is graft copolymerized to polyolefin elastomer (POE), and may improve compatibility and impact strength of the resin composition.

The POE may be specifically, polypropylene elastomer, polyethylene elastomer, polyethylenepropylene elastomer, ethylene-propylene-diene monomer elastomer, polyethylene-1-pentene elastomer, polyethylene-1-hexehe elastomer, polyethylene-1-heptene elastomer, or polyethylene-1-octene elastomer, and the like. More specifically, the MAH-g-POE may be maleic anhydride-grafted-polypropylene elastomer (MAH-g-PP), maleic anhydride-grafted-polyethylene elastomer (MAH-g-PE), or maleic anhydride-grafted-ethylene-propylene-diene monomer elastomer (MAH-g-EPDM), and mixtures of two or more of them may be used.

Further, the MAH-g-POE may be included in the content of 0.1 to 1.5 parts by weight, based on 100 parts by weight of the total weight of the PBAT and Meso PLA. More specifically, it may be included in the content of 0.1 parts by weight or more, or 0.3 parts by weight or more, or 0.5 parts by weight or more, and 1.5 parts by weight or less, or 1.0 parts by weight or less, or 0.8 parts by weight or less, based on 100 parts by weight of the total weight of the PBAT and Meso PLA.

Further, the MAH-g-POE may have weight average molecular weight (Mw) of 100,000g/mol or more, or 110,000g/mol or more, or 115,000g/mol or more, or 116,000g/mol or more, and 130,000g/mol or less, or 125,000g/mol or less, or 120,000g/mol or less.

In case the MAH-g-POE further meets the afore-mentioned Mw range requirement, it may be more favorable in terms of compatibility of the resin composition, and improvement in impact strength and mechanical properties.

Meanwhile, in the present disclosure, the weight average molecular weight (Mw) of the MAH-g-POE may be measured by GPC (gel permeation chromatography).

Specifically, in the present disclosure, as a gel permeation chromatography (GPC) device, Waters PL-GPC220 device was used, and Polymer Laboratories PLgel MIX-B 300 mm column was used. Wherein, a measurement temperature was 160°C. 1,2,4-trichlorobenzene was used as a solvent, and a flow rate was 1 mL/min. Each MAH-g-POE sample was pretreated by dissolving in 1,2,4-trichlorobenzene containing 0.0125% BHT (2,6-bis(1,1-dimethylethyl)-4-methylphenol) at 160°C for 10 hours using GPC analysis device (PL-GP220), and prepared at the concentration of 10 mg/10mL, and then, fed in an amount of 200 μL. Using a calibration curve formed using polystyrene standard specimen, Mw value was derived. 9 kinds of polystyrene standard specimens respectively having weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol were used.

Further, the resin composition according to the present disclosure may consist of the PBAT, Meso PLA, and MAH-g-POE, as resin components or polymer components.

Besides, the resin composition according to the present disclosure may further comprise other additives. As the additives, those commonly used when molding a resin composition in the field of thermoplastic polymer may be used without specific limitations.

The additives may comprise a heat stabilizer, an UV stabilizer, an inorganic filler, or a lubricant, and the like.

Further, the additives may be included in the content of 1 to 30 parts by weight, based on 100 parts by weight of the total weight of the PBAT and Meso PLA.

There is also provided herein a biodegradable resin product comprising the above-explained resin composition.

Further, the biodegradable resin product may be a biodegradable film.

The biodegradable resin product may have tensile strength in MD (Machine Direction or Mold direction), measured according to ISO 527 standard, of 300 kgf/cm$^2$ or more. More specifically, the biodegradable resin product may have tensile strength in MD of 300 kgf/cm$^2$ or more, or 310 kgf/cm$^2$ or more, or 330 kgf/cm$^2$ or more, or 350 kgf/cm$^2$ or more, and 500 kgf/cm$^2$ or less, or 400 kgf/cm$^2$ or less, or 380 kgf/cm$^2$ or less.

Further, the biodegradable resin product may have elongation at break in MD, measured according to ISO 527 standard, of 500% or more. Specifically, elongation break in MD of the biodegradable resin product may be 500% or more, or 530% or more, or 540% or more, or 600% or more, and 1000% or less, or 800% or less, or 700% or less.

Further, the biodegradable resin product may have tensile modulus in MD, measured according to ISO 527, of 1600 kgf/cm$^2$ or more. Specifically, it may be 1600 kgf/cm$^2$ or more, or 1700 kgf/cm$^2$ or more, or 3000 kgf/cm$^2$ or more, and 15,000 kgf/cm$^2$ or less, or 12,000 kgf/cm$^2$ or less.

Further, the biodegradable resin product may have hydrolysis viscosity decrease rate calculated according to the following Equation 1, after exposure to distilled water of 50 °C to 60°C for 192 hours, of 70% or more. More specifically, it may be 70% or more, or 80% or more, and 100% or less, or 90% or less.

[Equation 1]

$$\text{Hydrolysis viscosity decrease rate (\%)} = [(Vo-Vf)/Vo] \times 100$$

in the Equation, Vo denotes zero shear viscosity of the product before hydrolysis experiment, and
Vf denotes zero shear viscosity of the product after hydrolysis experiment exposing to distilled water of 50 °C to 60°C for 192 hours.

Further, the biodegradable resin product may have biodegradability measured according to standard biodegradability test ISO 14855, of 45% or more, or 49% or more.

Due to such excellent mechanical properties and biodegradability, it may be used as a mulching film, or packaging material, and the like.

[Effect of the Invention]

The resin composition of the present disclosure has excellent mechanical properties, and can achieve high biodegradability.

[Brief Description of Drawings]

Fig. 1a is an observation photograph of a film, before biodegradability evaluation experiment of the film manufactured in Example 1, and Fig. 1b is an observation photograph of degradability of the film, 12 weeks after the biodegradability evaluation experiment.
Fig. 2a is an observation photograph of a film, before biodegradability evaluation experiment of the film manufactured in Comparative Example 1, and Fig. 2b is an observation photograph of degradability of the film, 12 weeks after the biodegradability evaluation experiment.
Fig. 3a is an observation photograph of a film, before biodegradability evaluation experiment of the film manufactured in Comparative Example 2, and Fig. 3b is an observation photograph of degradability of the film, 12 weeks after the biodegradability evaluation experiment.
Fig. 4 shows observation photographs of biodegradabilities of films, during enzyme screening experiment by a dipping method, for the films of Examples 1, 2 and Comparative Examples 1, 2.
Fig. 5 shows observation photographs of biodegradabilities of films, during enzyme screening experiment by a spray method, for the films of Examples 3 to 6, and Comparative Examples 3, 4.

[Best Mode for Carrying Out the Invention]

Hereinafter, preferable examples will be presented to assist in understanding of the invention. However, the following examples are provided only for better understanding of the invention, and the scope of the invention is not limited thereto.

Hereinafter, compounds used in Examples and Comparative Examples are as follow:

PBAT-1: ECOFLEX™ from BASF Corporation (melting temperature: 110~120°C; MI(ASTM D 1238, 190°C, 2.16kg): 2.7-4.9g/10min)
PBAT-2: SF1000™ from LG Chem (melting temperature: 110~130°C; MI(ASTM D 1238, 190°C, 2.16kg): 2.0~5.0 g/10min)
Polylactic acid (PLLA): LX-175™ from Total Corbion (density(ISO 1183): 1.24g/$cm^3$, MFI(ISO 1133-11, 190 °C 2.16kg): 3.00 g/10min)
Meso polylactic acid (Meso PLA): EXT 403M™ from Bio valore (density(ISO 1183): 1.24g/ml, MFI(ISO 1133-11, 190 °C 2.16kg): 9 g/10min)
Maleic anhydride-grafted-polyolefin elastomer: FUSABOND N493™ manufactured by DOW Corporation (weight average molecular weight(Mw): 116,000g/mol)

**Example 1**

In a twin-screw extruder (die diameter=32mm), PBAT-1, Meso PLA, and POE-g-MAH were added in the compositional ratio described in the following Table 1, and extruded under conditions of Barrel Temperature 140°C, Feed Rate 30 to 50kg/hr, and 300rpm, to prepare a resin composition in the form of pellets.

**Example 2**

In a twin-screw extruder (die diameter=32mm), PBAT-1, Meso PLA, and POE-g-MAH were added in the compositional ratio described in the following Table 1, and extruded under conditions of Barrel Temperature 200°C, Feed Rate 30 to 50kg/hr, and 300rpm, to prepare a resin composition in the form of pellets.

**Examples 3 to 6**

Resin compositions were prepared by the same method as Example 1, except that the added amounts and kinds of constructional elements were changed as described in the following Table 1.

**Comparative Example 1**

A resin composition was prepared by the same method as Example 1, except that PLLA was used instead of Meso PLA.

**Comparative Example 2**

A commercially obtained ecovio™ product manufactured by BASF Corporation was used.

**Comparative Example 3 and 4**

Resin compositions were prepared by the same method as Example 1, except that the added amounts and kinds of constructional elements were changed as described in the following Table 1.

[Table 1]

| | Resin A | | Resin B | | Resin A: Resin B weight ratio | Resin C |
|---|---|---|---|---|---|---|
| | PBAT-1 (wt%[a]) | PBAT-2 (wt%[a]) | Meso PLA (wt%[a]) | PLLA (wt%[a]) | | POE-g-MAH (parts by weight [b]) |
| Example 1 | 87 | | 13 | - | 8.7:1.3 | 0.5 |
| Example 2 | 87 | | 13 | - | 8.7:1.3 | 0.5 |
| Example 3 | - | 87 | 13 | - | 8.7:1.3 | 0.5 |
| Example 4 | - | 80 | 20 | - | 8.0: 2.0 | 0.5 |
| Example 5 | - | 70 | 30 | - | 7.0: 3.0 | 0.5 |
| Example 6 | - | 60 | 40 | - | 6.0:4.0 | 0.5 |
| Comparative Example 1 | 87 | - | - | 13 | 8.7:1.3 | 0.5 |
| Comparative Example 3 | - | 87 | - | 13 | 8.7:1.3 | 0.5 |
| Comparative Example 4 | - | 50 | 50 | | 5.0:5.0 | 0.5 |

In the table 1, wt%[a] is based on the total weight of the resin A and resin B, and parts by weight [b] is based on 100 parts by weight of the total weight of the resin A and resin B.

**Experimental Example 1**

From the resin compositions prepared in Examples and Comparative Examples, films were respectively manufactured as follows, and the properties were evaluated as follows. The results were shown in the following Table 2.

(1) Manufacture of film

The resin composition pellets prepared in Examples and Comparative Examples were molded to a thickness of 0.05mm at an extrusion temperature of 160°C~170°C, using a single screw extruder (Blown Film M/C, 19 PIE, L/D=25), to manufacture blown films. Wherein, a Blown-Up Ratio was 1.8, and a linear velocity was 5m/min.

(2) Tensile strength, elongation and tensile modulus

For the above-manufactured films of Examples and Comparative Examples, tensile strength in MD, elongation and tensile modulus were respectively measured according to ISO 527, using a universal testing machine (QUASUR™ 50, manufactured by GALDABINI). Wherein, a specimen was prepared in the form of a bar (width x height = 10mm x 150mm).

[Table 2]

| | Tensile strength ($kgf/cm^2$) | Elongation (%) | Tensile modulus ($kgf/cm^2$) |
|---|---|---|---|
| Example 1 | 346 | 663 | 1760 |
| Example 2 | 302 | 651 | 1682 |
| Example 3 | 323 | 617 | 3608 |
| Example 4 | 315 | 540 | 5187 |
| Example 5 | 354 | 538 | 7865 |
| Example 6 | 360 | 507 | 10711 |
| Comparative Example 1 | 305 | 535 | 1809 |
| Comparative Example 2 | 299 | 480 | 2813 |
| Comparative Example 3 | 322 | 466 | 4019 |
| Comparative Example 4 | 263 | 3 | 13348 |

**Experimental Example 2**

For the films of Examples and Comparative Examples manufactured in the Experimental Example 1, hydrolysis viscosity decrease rate was measured.

Specifically, each film of Examples 1, 2 and Comparative Example 1 was pressed to manufacture a specimen with a thickness of 2mm, and the manufactured specimen was dipped in 58°C distilled water for 192 hours for exposure.

For the exposed specimens, shear viscosity was respectively measured under conditions of 190°C and 0.1~100 rad/sec using a rheometer (EC Twist 502 model, manufactured by Anton paar company), to obtain each zero shear viscosity value, and hydrolysis (biodegradation physical behavior) viscosity decrease rate was calculated according to the following Equation 1.

[Equation 1]

$$\text{Hydrolysis viscosity decrease rate}(\%)=[(Vo-Vf)/Vo] \times 100$$

in the Equation, Vo denotes zero shear viscosity of the product before hydrolysis experiment, and

Vf denotes zero shear viscosity of the product after hydrolysis experiment exposing to distilled water of 50°C to 60°C for 192 hours.

Specifically, in the experimental example, Vf is zero shear viscosity of film, after exposure to 58°C distilled water for 192hr.

[Table 3]

| | Hydrolysis viscosity decrease rate (%) |
|---|---|
| Example 1 | 81 |
| Example 2 | 74 |
| Comparative Example 1 | 60 |

**Experimental Example 3**

A biodegradability test was conducted according to standard biodegradability test ISO 14855.

Specifically, each film of Example 1 and Comparative Examples 1, 2 manufactured in the Experimental Example

1 was cut to width x height = 2.5cm x 2.5cm and thickness of 0.02mm, thus preparing a specimen. To observe surface area change of the specimen, the specimen was fixed to a non-biodegradable plastic mold. 3 specimens were prepared for three times tests.

Compost used for aerobic biodegradation test was made with the composition as shown in the following Table 4, as presented in the standard, and a 30cm x 20 cm x 10cm (l x w x h) container was used.

[Table 4]

| Material | Dry weight (wt%, based on the total dry weight of compost) |
|---|---|
| Sawdust | 40 |
| Feed | 30 |
| Aged fertilizer | 10 |
| Corn starch | 10 |
| Sucrose | 5 |
| Corn oil | 4 |
| Urea | 1 |
| Sum | 100 |

The dry solid content and volatile solid content were calculated according to the following formulas. Wherein, a wet solid weight ($mat_w$) was measured at room temperature, and a dry solid weight ($mat_d$) was calculated from the amount of solid obtained after treatment in a dry oven at a temperature of 110°C for more than 30 minutes.

Non-volatile solid weight ($mat_{nv}$) was calculated from the amount of residues obtained after treatment in a dry oven at a temperature of 550°C for more than 50 minutes.

$$\text{Dry solid content (\%)} = mat_d / mat_w \times 100$$

$$\text{Volatile solid content (to wet solid weight)(\%)} = [(mat_d - mat_{wnv}) / mat_w] \times 100$$

$$\text{Volatile solid content (to dry solid weight)(\%)} = [(mat_d - mat_{wnv}) / mat_d] \times 100$$

For biodegradability, a biodegradability test by compost was progressed for 12 weeks under reaction tank condition (25±2 °C) capable of maintaining aerobic condition, according to "KS T ISO 20200: 2004 plastic- plastic degradability measurement under regulated composting conditions by laboratory scale test".

After completing the test, the sample was filtered using standard sieve sizes of 10mm, 5mm and 2mm, and then, washed and dried at 40±2 °C.

The plastic material filtered through the sieve during the filtering process is regarded as non-degradable material, and the material passing through the sieve is regarded to be degraded. A biodegradability D was calculated according to the following Equation 2. The results were shown in Table 5.

[Equation 2]

$$\text{Biodegradability D(\%)} = [(m_i - m_f) / m_i] \times 100$$

In the Equation, $m_i$ is the initial dry solid weight(g) of a sample, and
$m_f$ is the dry solid weight(g) of the remaining sample (non-degradable material) filtered through a sieve.

Further, during, before and 12 weeks after the biodegradability evaluation experiment of the films manufactured in Example 1 and Comparative Examples 1, 2, degradabilities of the films were observed, and the results were shown in Fig. 1a to Fig. 3b.

[Table 5]

| | $m_i$ (g) | $m_f$ (g) | Biodegradability(%) |
|---|---|---|---|
| Example 1 | 5.04 g | 2.52 g | 49.9 |
| Comparative Example 1 | 5.04 g | 2.94 g | 41.6 |
| Comparative Example 2 | 5.03 g | 3.87 g | 23.3 |

When a decrease in the total volatile-solid content between the initial synthetic waste and the compost obtained at the end of the test in each reaction tank is 30% or more, and biodegradability difference is 10% or less at three times repeated tests, the test is regarded to be valid. Considering this, the film manufactured using the resin composition of Example exhibited biodegradability of 49.9%, and it was confirmed therefrom that the resin composition of Example has excellent biodegradability.

**Experimental Example 4**

For the films of Examples and Comparative Examples manufactured in the Experimental Example 1, enzyme screening by a dipping method was conducted as follows, and from the result, biodegradability was evaluated.

(1) Manufacture of specimen

Specifically, each film of Examples 1, 2 and Comparative Examples 1, 2 with a thickness of 0.05mm manufactured in the Experimental Example 1 was cut to width x height = 1cm x 1cm to prepare a specimen, and it was disinfected with ethanol.

(2) Preparation of hydrolase solution

To 1ml of 1X Phosphate-Buffered Saline (PBS), 2 kinds of lipase and 2 kinds cutinase and 1 kind of alpha amylase as follows were mixed to prepare a hydrolase solution.

Lipase *Rhizopus Oryzae* 1000 unit
Lipase *Pseudomonas Cepacia* 3000 unit
Cutinase *Aspergillus Oryzae* 2000 unit
Cutinase *Humicola Insolens* 1500 unit
$\alpha$-amylase *Bacillus Licheniformis* 1500 unit

(3) Biodegradability evaluation

The biodegradability evaluation was conducted under conditions of 37 °C and 760 mmHg as follows.
0.5 ml of the hydrolase solution was put in one well of 24-well plate, and two specimens of (1) were dipped for 7 days. Immediately after dipping (0 day), 5 days after dipping (5 day} and 7 days after dipping (7 day), patterns of collapse of the specimens and detachment of pieces were respectively observed. The results were shown in Fig. 4.
As the result of the experiment, the films of Examples 1 and 2 were rapidly biodegraded compared to Comparative Example 2. Considering that the film of Comparative Example 2 is a home composting certified product, it can be expected that the films manufactured using the resin compositions of the present disclosure may also exhibit high biodegradability under home and soil composting conditions.

**Experimental Example 5**

For the films of Examples and Comparative Examples manufactured in the Experimental Example 1, enzyme screening by a spray method was conducted as follows, and from the results, biodegradability was evaluated.

(1) Preparation of culture media

A circular 1% agar plate with a diameter of 90 mm was prepared by a method of preparing a petri dish media.
In a 2000 ml Erlenmeyer flask, 10 g of agar (manufacturing company: BD Difco, product name: Bacto Agar, product No.:214010) and 1000 ml of distilled water were put to prepare a solution. The solution was put in an autoclave and sterilized at a temperature of 121°C and a pressure of 0.1 MPa for 15 minutes. The sterilized solution was aliquoted each

10 ml in a circular sterilized petri dish with a diameter of 90 mm to prepare a culture media.

(2) Preparation of resin solution

Each film of Examples 3 to 6, and Comparative Examples 3 and 4 manufactured in the Experimental Example 1 was dissolved in 20 ml of chloroform to a concentration of 1 wt% to prepare a resin solution.

(3) Preparation of hydrolase solution

To 1 ml of 1X Phosphate-Buffered Saline (PBS), 2 kinds of lipase and 2 kinds of cutinase as follows were mixed to prepare a hydrolase solution (stock solution). Further, a 1/10 diluted solution of the stock solution was prepared.

Lipase *Rhizopus Oryzae* 1000 unit
Lipase *Pseudomonas Cepacia* 3000 unit
Cutinase *Aspergillus Oryzae* 2000 unit
Cutinase *Humicola Insolens* 1500 unit

(4) Evaluation of biodegradability

On the agar plate of (1), 6 ml of the resin solution prepared in (2) was uniformly sprayed and dried at room temperature for about 10 minutes so that the solvent was volatilized, to prepare a specimen with an average thickness of 0.7 μm. The average thickness of the specimen was calculated from the roughness of the specimen measured before and after spraying, using an optical profiler (model name: NewView™ 8300, Zygo corp.).

Next, on each specimen, the stock solution and 1/10 diluted solution of the hydrolase solution of (3) were respectively dropped at four points each 5 μl. Thereafter, the area of a clear zone formed by degradation of the sprayed resin by the hydrolase solution and a degree to which it becomes clear were observed with the naked eye. The experiment results were shown in Fig. 5.

Meanwhile, the entire process of the biodegradability evaluation was conducted under 28 °C and atmospheric pressure (760±20 torr).

As the result of experiment, clear zones appeared 1 hour after treatment in Example 6 and Comparative Example 4, clear zones appeared 1.5 hours after treatment in Example 4 and Example 5, and clear zones appeared 2.5 hours after treatment in Example 3, and a clear zone appeared 8 hours after treatment in Comparative Example 3.

## Claims

**1.** A resin composition comprising

polybutylene adipate-co-terephthalate,
meso polylactic acid, and
maleic anhydride-grafted-polyolefin elastomer,
wherein the resin composition comprises the polybutylene adipate-co-terephthalate and the meso polylactic acid at a weight ratio of 9.0:1.0 to 6.0:4.0.

**2.** The resin composition according to claim 1, wherein the meso polylactic acid is an amorphous polymer comprising a repeat unit represented by the following Chemical Formula 1:

[Chemical Formula 1]

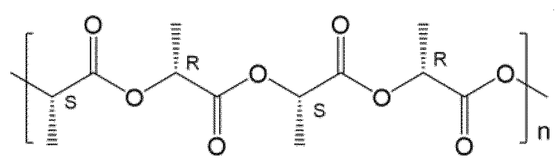

in the Chemical Formula 1, n is an integer of 2 or more.

3. The resin composition according to claim 1, wherein the meso polylactic acid meets the following requirements of (a1) and (a2):

(a1) density (ISO 1183): 1.15 to 1.35 g/ml
(a2) melt flow index (MFI) (ISO 1133-11, 190°C, 2.16kg): 3 to 15 g/10min.

4. The resin composition according to claim 1, wherein the polybutylene adipate-co-terephthalate meets the following requirements of (b1) and (b2):

(b1) melting temperature: 100 to 140 °C
(b2) melt index (MI) (ASTM D 1238, 190°C, 2.16kg): 2.0 to 5.5 g/10min.

5. The resin composition according to claim 1, wherein the maleic anhydride-grafted-polyolefin elastomer is comprised in an amount of 0.1 to 1.5 parts by weight, based on 100 parts by weight of a total weight of the polybutylene adipate-co-terephthalate and the meso polylactic acid.

6. The resin composition according to claim 1, wherein the maleic anhydride-grafted-polyolefin elastomer has a weight average molecular weight of 100,000g/mol to 130,000g/mol.

7. A biodegradable resin product comprising the resin composition according to any one claims 1 to 6.

8. The biodegradable resin product according to claim 7, wherein tensile strength in MD, measured according to ISO 527, is 300 $kgf/cm^2$ or more.

9. The biodegradable resin product according to claim 7, wherein elongation in MD, measured according to ISO 527, is 500% or more.

10. The biodegradable resin product according to claim 7, wherein tensile modulus in MD, measured according to ISO 527, is 1600 $kgf/cm^2$ or more.

11. The biodegradable resin product according to claim 7, wherein a hydrolysis viscosity decrease rate calculated according to the following Equation 1, after exposure to distilled water of 50°C to 60°C for 192 hours, is 70% or more.

[Equation 1]

$$\text{Hydrolysis viscosity decrease rate}(\%) = [(Vo-Vf)/Vo] \times 100$$

in the Equation, Vo denotes zero shear viscosity of the product before hydrolysis experiment, and
Vf denotes zero shear viscosity of the product after hydrolysis experiment exposing to the distilled water of 50°C to 60°C for 192 hours.

12. The biodegradable resin product according to claim 7, wherein a biodegradability measured according to a standard biodegradability test ISO 14855 is 45% or more.

13. The biodegradable resin product according to claim 7, wherein the product is a biodegradable film.

【Fig. 1a】

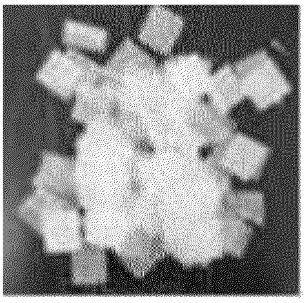

【Fig. 1b】

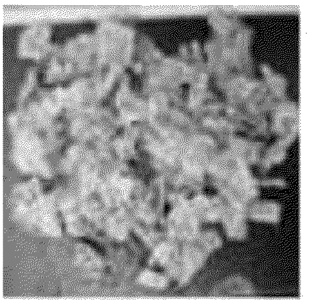

【Fig. 2a】

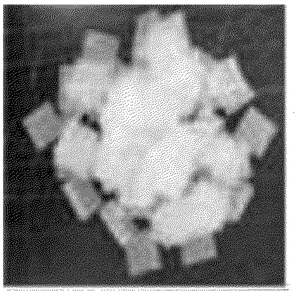

【Fig. 2b】

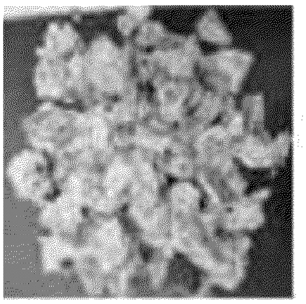

【Fig. 3a】

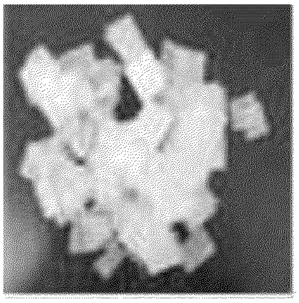

【Fig. 3b】

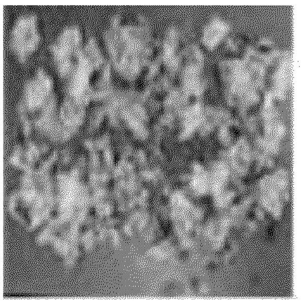

【Fig. 4】

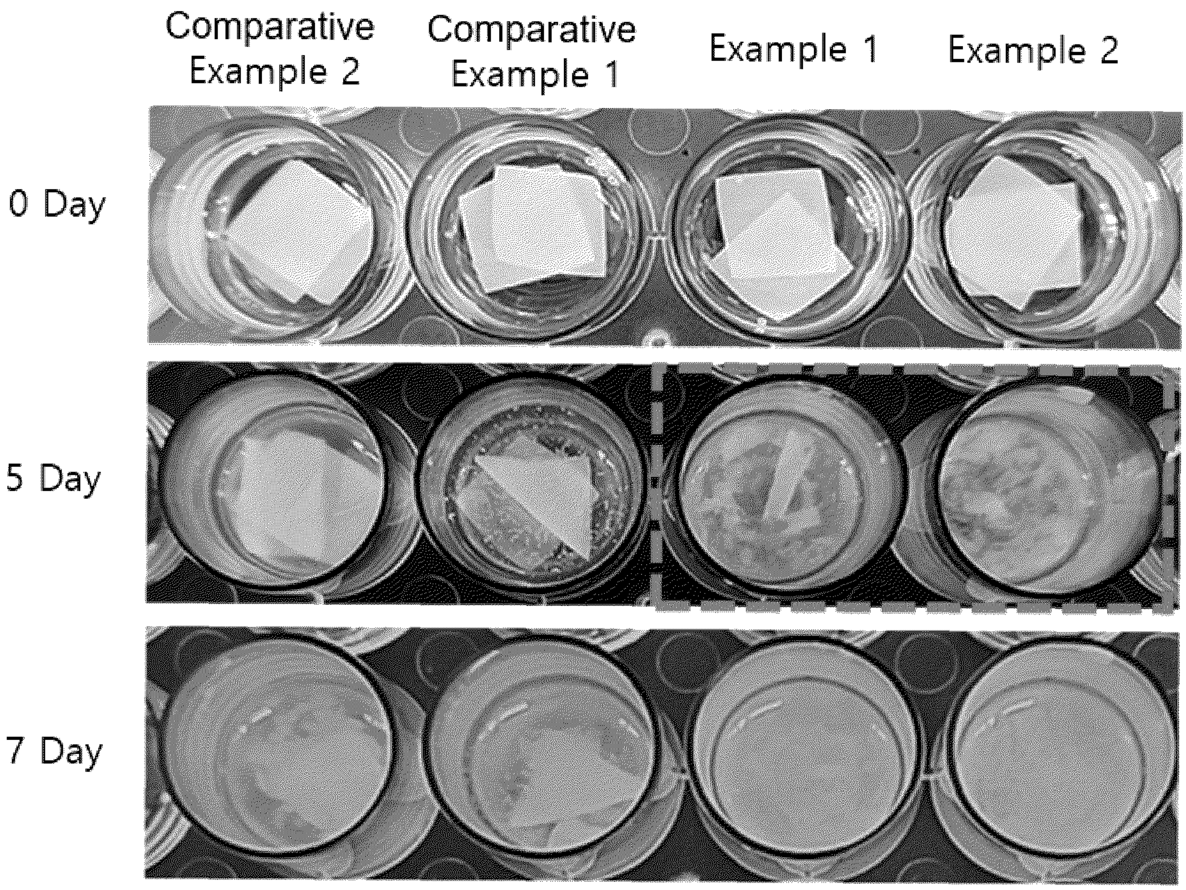
Comparative Example 2
Comparative Example 1
Example 1
Example 2
0 Day
5 Day
7 Day

【Fig. 5】

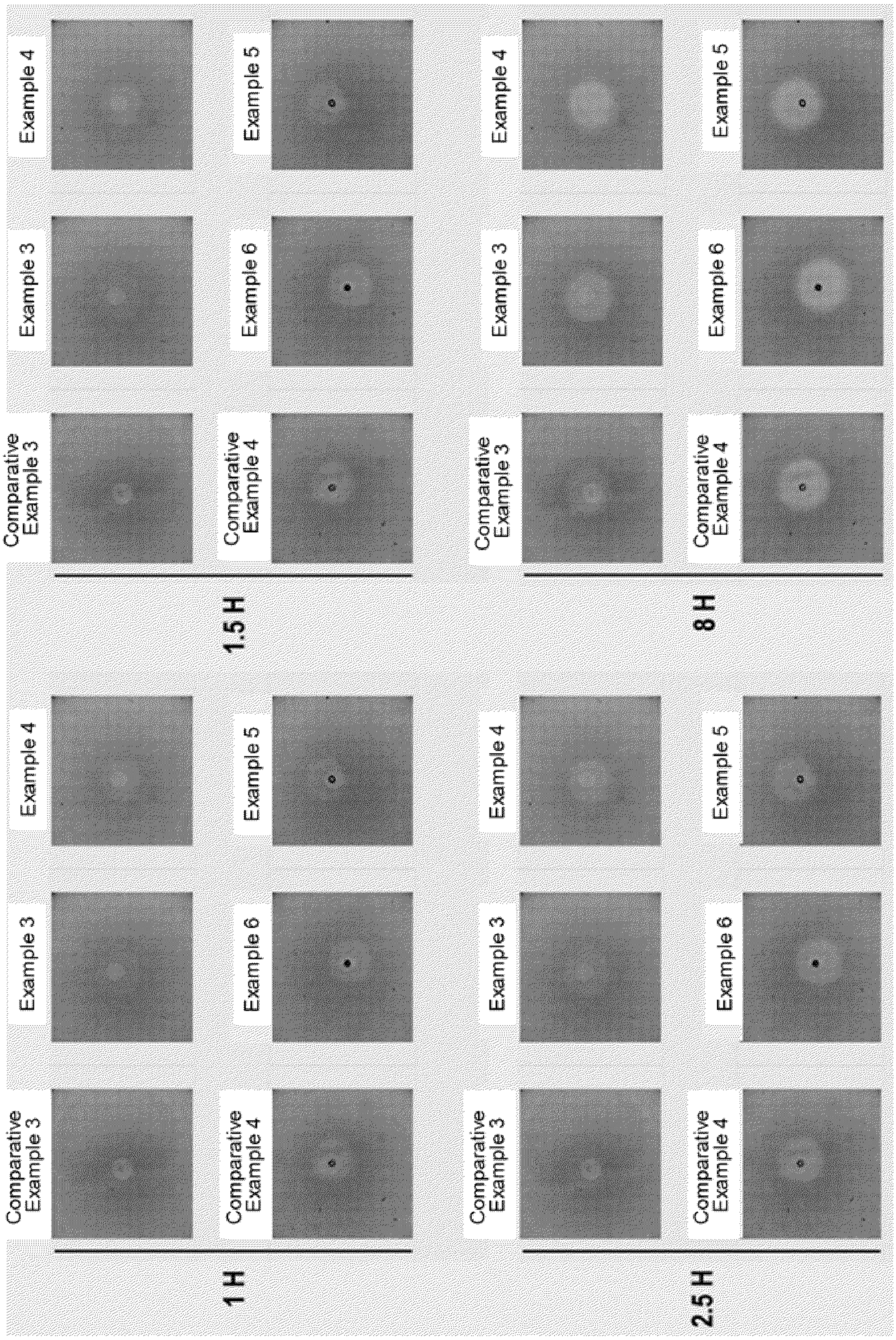
1 H
Comparative Example 3
Example 3
Example 4
Comparative Example 4
Example 6
Example 5
1.5 H
Comparative Example 3
Example 3
Example 4
Comparative Example 4
Example 6
Example 5
2.5 H
Comparative Example 3
Example 3
Example 4
Comparative Example 4
Example 6
Example 5
8 H
Comparative Example 3
Example 3
Example 4
Comparative Example 4
Example 6
Example 5

**INTERNATIONAL SEARCH REPORT**

International application No. **PCT/KR2024/014588**

**A. CLASSIFICATION OF SUBJECT MATTER**

**C08L 67/02**(2006.01)i; **C08L 67/04**(2006.01)i; **C08L 51/06**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 67/02(2006.01); A41D 19/00(2006.01); A41D 19/04(2006.01); B32B 27/08(2006.01); B32B 27/36(2006.01); C08J 5/18(2006.01); C08J 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌(polybutylene), 아디페이트(adipate), 테레프탈레이트(terephthalate), 메소 폴리락트 산(meso polylactic acid), 말레산(maleic acid), 엘라스토머(elastomer), 생분해성 수지(biodegradable resin)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0055318 A (LG CHEM, LTD.) 25 April 2023 (2023-04-25)<br>See paragraphs [0060]-[0066], [0070], [0073], [0083], [0089], [0109]-[0112], [0114], [0115], [0117]-[0120], [0133], [0134], [0137]-[0140] and [0145]; and tables 1 and 2. | 1-13 |
| Y | KR 10-2009-0031453 A (DUPONT TEIJIN FILMS U.S. LIMITED PARTNERSHIP) 25 March 2009 (2009-03-25)<br>See paragraphs [0003], [0012] and [0018]. | 1-13 |
| A | KR 10-2022-0165659 A (LEE, Sung Yull) 15 December 2022 (2022-12-15)<br>See claims 1-12. | 1-13 |
| A | JP 2013-531746 A (SMARTHEALTH INCORPORATED) 08 August 2013 (2013-08-08)<br>See claims 1-24. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/014588**

**C. DOCUMENTS CONSIDERED TO BE RELEVANT**

| Category* | Citation of document, with indication, where appropriate, of the relevant passages | Relevant to claim No. |
|---|---|---|
| A | WO 2014-206996 A1 (FUTERRO S.A.) 31 December 2014 (2014-12-31) See claims 1-15. | 1-13 |

Form PCT/ISA/210 (second sheet) (July 2022)

**INTERNATIONAL SEARCH REPORT**
**Information on patent family members**

International application No.
**PCT/KR2024/014588**

| Patent document cited in search report | | | Publication date (day/month/year) | Patent family member(s) | | | Publication date (day/month/year) |
|---|---|---|---|---|---|---|---|
| KR | 10-2023-0055318 | A | 25 April 2023 | CN | 117897449 | A | 16 April 2024 |
| | | | | EP | 4328269 | A1 | 28 February 2024 |
| | | | | JP | 2024-520117 | A | 21 May 2024 |
| | | | | US | 2024-0309204 | A1 | 19 September 2024 |
| | | | | WO | 2023-068447 | A1 | 27 April 2023 |
| KR | 10-2009-0031453 | A | 25 March 2009 | BR | PI0713180 | A2 | 17 April 2012 |
| | | | | CN | 101563405 | A | 21 October 2009 |
| | | | | EP | 2046873 | A2 | 15 April 2009 |
| | | | | JP | 2009-543718 | A | 10 December 2009 |
| | | | | JP | 2013-018549 | A | 31 January 2013 |
| | | | | JP | 5437801 | B2 | 12 March 2014 |
| | | | | JP | 5728442 | B2 | 03 June 2015 |
| | | | | KR | 10-1470353 | B1 | 09 December 2014 |
| | | | | TW | 200810920 | A | 01 March 2008 |
| | | | | US | 2011-0163101 | A1 | 07 July 2011 |
| | | | | US | 2013-0313260 | A1 | 28 November 2013 |
| | | | | US | 8507084 | B2 | 13 August 2013 |
| | | | | US | 9073674 | B2 | 07 July 2015 |
| | | | | WO | 2008-008381 | A2 | 17 January 2008 |
| KR | 10-2022-0165659 | A | 15 December 2022 | WO | 2022-260353 | A1 | 15 December 2022 |
| JP | 2013-531746 | A | 08 August 2013 | CN | 103096742 | A | 08 May 2013 |
| | | | | CN | 108102321 | A | 01 June 2018 |
| | | | | EP | 2584925 | A2 | 01 May 2013 |
| | | | | JP | 5989640 | B2 | 07 September 2016 |
| | | | | US | 2007-0207282 | A1 | 06 September 2007 |
| | | | | US | 2010-0257657 | A1 | 14 October 2010 |
| | | | | US | 2015-0208743 | A1 | 30 July 2015 |
| | | | | WO | 2011-163377 | A2 | 29 December 2011 |
| WO | 2014-206996 | A1 | 31 December 2014 | CN | 105492207 | A | 13 April 2016 |
| | | | | EP | 3013585 | A1 | 04 May 2016 |
| | | | | US | 2016-0271909 | A1 | 22 September 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230129095
- KR 1020240130452